# EUROPEAN PATENT APPLICATION

(11) **EP 4 498 274 A1**
(43) Date of publication of application: **29.01.2025**
(21) Application number: 24186804.1
(22) Date of filing: 05.07.2024
(51) Int. Cl.: G06F 21/60, G06F 21/62

(54) **PROCESSING DEVICE AND METHOD FOR WITHDRAWING PRIVACY POLICY**

(30) Priority: 27.07.2023 JP 2023122700
(71) Applicant: Sharp Kabushiki Kaisha, Sakai-ku Sakai-shi, Osaka 590-8522 (JP)
(72) Inventor: KONISHI, Toshiyuki, 590-8522 Sakai City, Osaka (JP)
(74) Representative: Müller Hoffmann & Partner

(57) **Abstract**

A processing device includes: a storage that stores a consent log that allows an application of privacy policy regarding a use of personal information based on an operation by a user; a display that displays an application status of the privacy policy via a management screen; and one or more controllers that control the application of the privacy policy depending on whether or not the consent log is stored. When receiving a withdrawal instruction to refuse the application of the privacy policy via the management screen in a state of allowing the application of the privacy policy, the one or more controllers delete the consent log from the storage.

## Description

### BACKGROUND OF THE INVENTION

### Field of the Invention

The present disclosure relates to a processing device and the like. The present application is based on Japanese Patent Application No. 2023-122700, filed in Japan on July 27, 2023, the contents of which are incorporated herein.

### Description of the Background Art

With the establishment of laws such as Act on the Protection of Personal Information, a user of a devices is increasingly required to consent to a privacy policy that stipulates how personal information is handled at timing such as when starting to use the device. The privacy policy is notified, published, or the like by a business operator (apparatus vendor) that handles personal information. The business operator can use the personal information obtained via the device by receiving user's consent to the privacy policy.

For example, the prior art shows an information processing device that can display a notification screen that displays the content of the notification regarding the privacy policy and a button to consent to the privacy policy.

An object of the present disclosure is to provide a processing device and the like which allow a user to withdraw privacy policy once consented.

### SUMMARY OF THE INVENTION

In order to solve the above-mentioned problems, a processing device according to the present disclosure includes: a storage that stores a consent log that allows an application of privacy policy regarding the use of personal information based on an operation by a user; a display that displays an application status of the privacy policy via a management screen; and one or more controllers that control the application of the privacy policy depending on whether or not the consent log is stored. When the one or more controllers receive a withdrawal instruction to refuse the application of the privacy policy via the management screen in a state of allowing the application of the privacy policy, the one or more controllers delete the consent log from the storage.

Further, a method for withdrawing privacy policy according to the present disclosure includes: storing in a storage device a consent log that allows an application of privacy policy regarding the use of personal information based on an operation by a user; displaying an application status of the privacy policy via a management screen; and controlling the application of the privacy policy depending on whether or not the consent log is stored. When a withdrawal instruction to refuse the application of the privacy policy is received via the management screen in a state of allowing the application of the privacy policy, the consent log is deleted from the storage device.

Further, a processing device according to the present disclosure includes: one or more controllers that apply privacy policy regarding the use of personal information based on a user's consent to the privacy policy; and a display that displays a consent status of the user to the privacy policy via a management screen. When the one or more controllers receive a withdrawal instruction to withdraw the privacy policy via the management screen in a state of allowing the application of the privacy policy, the one or more controllers end the application of the privacy policy.

According to the present disclosure, it is possible to provide the processing device and the like which allow the user to withdraw the privacy policy once consented.

### BRIEF DESCRIPTION OF THE DRAWINGS

FIG. 1 is an external perspective diagram of a multifunction device according to a first embodiment.
FIG. 2 is a functional configuration diagram of the multifunction device according to the first embodiment.
FIG. 3 is a flowchart describing a flow of processes according to the first embodiment.
FIGS. 4A and 4B are diagrams describing consent log management tables.
FIG. 5 is a flowchart describing a flow of processes according to the first embodiment.
FIGS. 6A and 6B are diagrams describing operation examples according to the first embodiment.
FIG. 7 is a diagram describing an operation example according to the first embodiment.
FIG. 8 is a diagram describing an operation example according to the first embodiment.
FIGS. 9A and 9B are diagrams describing operation examples according to the first embodiment.
FIG. 10 is a diagram describing an operation example according to the first embodiment.
FIG. 11 is a diagram describing an operation example according to the first embodiment.
FIG. 12 is a flowchart describing a flow of processes according to a second embodiment.
FIG. 13 is a flowchart describing a flow of processes according to a third embodiment.

### DESCRIPTION OF THE PREFERRED EMBODIMENTS

Hereinafter, embodiments of the present disclosure are described with reference to the drawings. In the present disclosure, a multifunction device that can execute jobs related to, for example, copying, faxing, image transmission, and the like in one housing is described as one form of an image processing device implementing a processing device according to the present disclosure. Note that the following embodiments are examples for describing the present disclosure, and the technical scope described in the claims is not limited to the following description.

With the establishment of laws such as Act on the Protection of Personal Information, a user of a device is increasingly required to consent to privacy policy that stipulates how personal information is handled at timing such as when starting to use the device.

In particular, in Europe, legislation is being considered that requires security measures for consumer IoT products. A businesses operator that manufactures and sells IoT products for Europe must comply with such a law.

For example, the UK IoT Security Act, which has a compliance deadline of December 2023, is being developed based on European standards (EN 306 645).

The European standard (EN 306 645) stipulates the following provisions regarding display of a consent status of privacy policy and withdrawal of the consent to the privacy policy. Provision 6-2 Where personal data is processed on the basis of consumers' consent, this consent shall be obtained in a valid way. Provision 6-3 Consumers who gave consent for the processing of their personal data shall have the capability to withdraw it at any time.

Until now, as shown in the prior art, the consent to the privacy policy has been obtained by notifying a user of a notification screen that displays the content of the notification regarding the privacy policy as well as a button for consenting to the privacy policy. However, once the user has consented to the privacy policy, it was difficult for the user to withdraw the consent to the privacy policy by requesting the withdrawal.

Further, in some cases, it is possible to disable the application of personal information. However, since the consent to the privacy policy remains, it has been difficult to exclude the possibility that some personal information may be used.

In the present disclosure, a processing device and the like which allow a user to withdraw privacy policy once consented and can prevent unintended use of personal information upon withdrawal of the privacy policy are achieved by the following embodiments.

### 1 First embodiment

### 1.1 Functional configuration

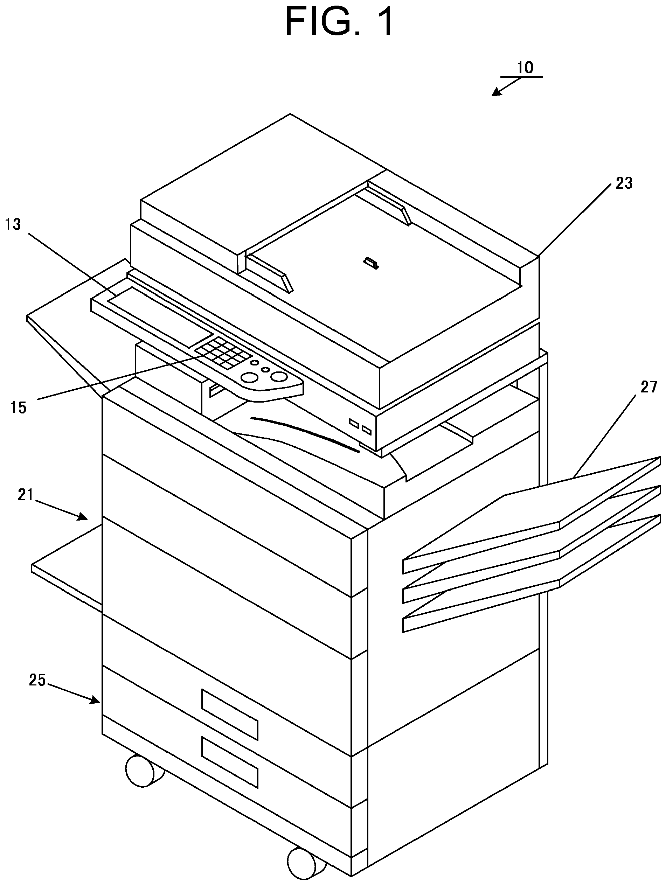

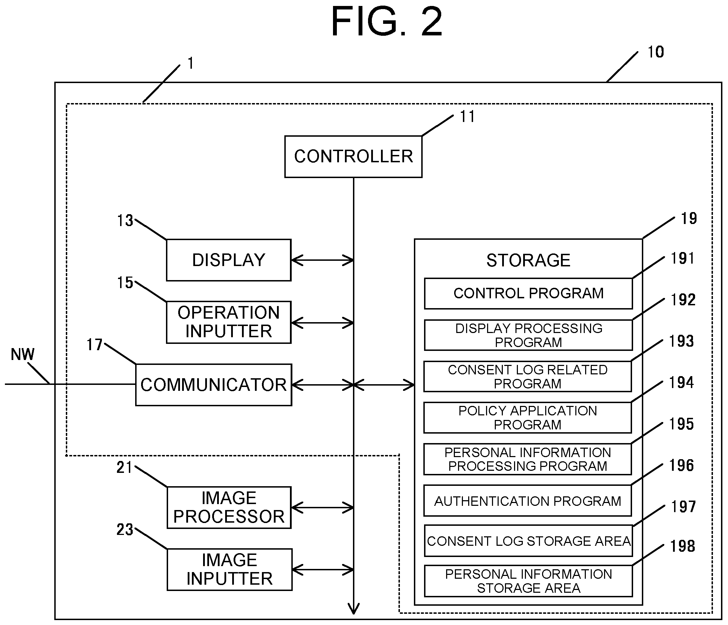

A functional configuration of a multifunction device 10 according to a first embodiment is described using FIG. 1 and FIG. 2. FIG. 1 is an external perspective diagram schematically describing an overall configuration of the multifunction device 10. FIG. 2 is a functional configuration diagram of the multifunction device 10 in which a processing device 1 according to the present disclosure is implemented. The multifunction device 10 includes an image processor 21 and an image inputter 23 in addition to the configuration of the processing device 1 shown in the dotted line frame in FIG. 2.

One or more controllers 11 control the entire processing device 1 and the entire multifunction device 10. The one or more controllers 11 are configured by, for example, one or more arithmetic devices (central processing unit (CPU), etc.). The one or more controllers 11 achieve their functions by reading and executing various programs stored in a storage 19.

A display 13 is a display device that displays various pieces of information to a user or the like. The display 13 can be configured with, for example, an LCD, an organic electro-luminescence (EL) display, or the like.

An operation inputter 15 receives input of information by the user or the like. The operation inputter 15 can be configured with various input devices such as, for example, an operation key such as a hard key or a software key and a button. Note that the operation inputter 15 can be configured as a touch panel display that allows input via the display 13. In this case, examples of a touch panel input method that can be adopted include a general method such as a resistive film method, an infrared method, an electromagnetic induction method, or a capacitance method.

A communicator 17 includes a wired and/or wireless interface for communicating with other devices, not shown, via, for example, a network NW such as a local area network (LAN), a wide area network (WAN), the Internet, a telephone line, or a fax line. Further, the communicator 17 may include an interface related to a (short-range) wireless communication technology such as, for example, Bluetooth (registered trademark), near field communication (NFC), Wi-Fi (registered trademark), ZigBee (registered trademark), Irda, or wireless USB.

The storage 19 stores various programs necessary for the operation of the processing device 1 and the multifunction device 10, and various data. The storage 19 can be configured with one or more storage devices (memories) such as, for example, random access memory (RAM), a hard disk drive (HDD), a solid state drive (SSD), and read only memory (ROM).

In the first embodiment, the storage 19 stores a control program 191, a display processing program 192, a consent log related program 193, a policy application program 194, a personal information processing program 195, and an authentication program 196, and secures a consent log storage area 197 and a personal information storage area 198.

The control program 191 is a program read by the one or more controllers 11 to comprehensively control the entire processing device 1 and the entire multifunction device 10. The one or more controllers 11 which have read the control program 191 control the display 13, the operation inputter 15, the communicator 17, the image processor 21, or the image inputter 23, thereby being able to achieve functions performed by the multifunction device 10 as jobs, such as, for example, copying, faxing, and image data transmission.

The display processing program 192 is a program read by the one or more controllers 11 when a home screen, a privacy policy consent screen, a privacy policy management screen, and the like, which are described below, are displayed on the display 13. The one or more controllers 11 which have read the display processing program 192 use an image content, not shown, stored in the storage 19 to display the home screen, the privacy policy consent screen, the privacy policy management screen, and the like on the display 13.

The consent log related program 193 is a program read by the one or more controllers 11 when a consent log that reflects the user's intention to allow the application of the privacy policy is generated. Note that, in the present disclosure, regarding the handling of personal information (identification information for identifying a user, information on a job executed by the user identified by the user identification information, etc.), a user's intention, operation, action, or the like, for allowing the application of the privacy policy established by the business operator, is referred to as "consent" or "consent to". The one or more controllers 11 which have read the consent log related program 193 generate a privacy policy consent screen depending on the application status of the privacy policy. The privacy policy consent screen can include, for example, in addition to a text display area that displays the specific contents of the privacy policy, such as the definition of personal information, the purpose of use of personal information, the possibility of providing personal information to a third party, and the possibility of joint use of personal information, a selection button (e.g., "consent" button), a check box, or the like, which can be selected by the user who has confirmed the contents of the privacy policy. The one or more controllers 11 receive a user operation on the privacy policy consent screen, that is, a selection instruction of the selection button by the user, thereby determining that the consent for allowing the application of the privacy policy has been obtained. After obtaining the consent from the user, the one or more controllers 11 generates a consent log and stores it in the consent log storage area 197 of the storage 19. Note that the consent from the user may be obtained not only by the selection of the selection button or the like but also by, for example, the business operator that manages the multifunction device 10 receiving a document from the user by mail, e-mail, or the like stating that the user has consented to the privacy policy. In this case, the business operator sends the generated consent log to the multifunction device 10 and stores it in the consent log storage area 197.

Further, the one or more controllers 11 which have read the consent log related program 193 delete the consent log from the consent log storage area 197 when a withdrawal instruction to refuse the application of the privacy policy is received via a privacy policy management screen described below in the state of allowing the application of the privacy policy. In the present disclosure, the user's intention, operation, or action to change (refuse) the application of the consented privacy policy is referred to as "withdrawal" or "withdraw".

The policy application program 194 is a program read by the one or more controllers 11 to control the application or non-application (cancellation) of the privacy policy to personal information. The one or more controllers 11 which have read the policy application program 194 controls the application/non-application (cancellation) of the privacy policy depending on whether or not the consent log is stored in the consent log storage area 197.

The personal information processing program 195 is a program read by the one or more controllers 11 to control processing of the personal information to which the privacy policy has been applied upon deletion of the consent log. In the first embodiment, the one or more controllers 11 which have read the personal information processing program 195 delete the personal information as data to be deleted from the personal information storage area 198 in the storage 19.

The authentication program 196 is a program read by the one or more controllers 11 to authenticate the user attempting to log in to the multifunction device 10. The one or more controllers 11 which have read the authentication program 196 function as an authenticator, and when the user authentication function is enabled, the one or more controllers 11 display a login screen, not shown, on the display 13 and prompts the user to enter a login user name and a login password. The one or more controllers 11 store, in advance, the login user name and the login password related to the user authentication in association with each other, and compare them with the login user name and the login password entered via the login screen, thereby being able to perform user login authentication. In this process, the one or more controllers 11 determines whether the login user is an administrator user who has administrator authority for the multifunction device 10 or a general user who is only authorized to use the multifunction device 10, based on the user authentication result. Note that the login authentication can be performed not only by knowledge authentication based on input of the login user name and the login password but also by, for example, property authentication using a token, a key, an integrated circuit (IC) card, or a smartphone, a biometric authentication such as face authentication or fingerprint authentication, or the like.

The consent log storage area 197 is a storage area that stores the consent log generated by the one or more controllers 11 which have read the consent log related program 193.

The personal information storage area 198 is a storage area that stores the personal information (identification information for identifying a user, information on a job executed by the user identified by the user identification information, etc.).

### 1.2 Process flow

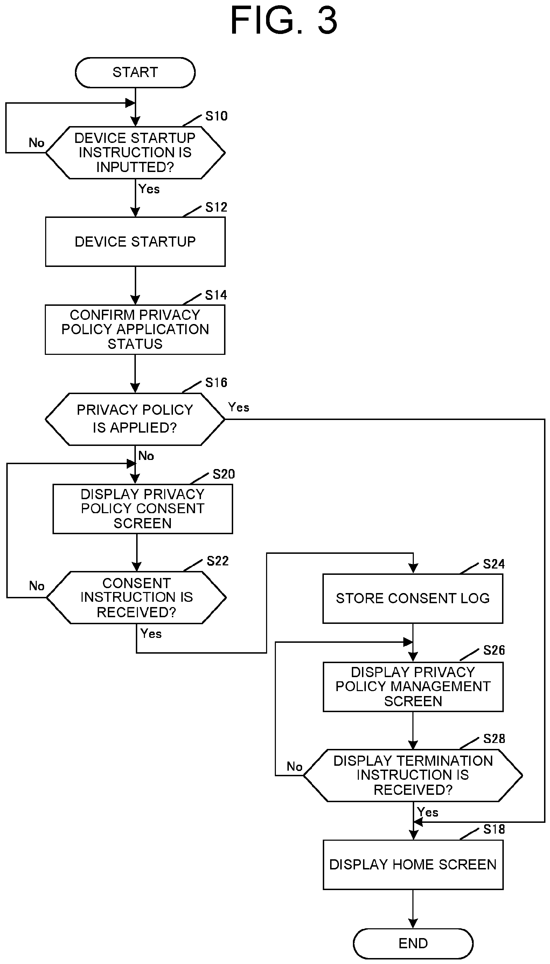

Next, a flow of processes according to the first embodiment is described. FIG. 3 is a flowchart describing a flow of processes from device startup of the multifunction device 10 to obtaining the consent to the privacy policy. The processes described in FIG. 3 are executed by the one or more controllers 11 reading the control program 191, the display processing program 192, the consent log related program 193, the authentication program 196, and the like.

The one or more controllers 11 determine whether or not a device startup instruction input has been received (step S10). When determining that the device startup instruction input has been received, the one or more controllers 11 start a device startup process (step S10; Yes, proceeding to step S12). Note that, when determining that the device startup instruction input has not been received, the one or more controllers 11 wait until the startup instruction input is received (step S10; No).

Next, the one or more controllers 11 determine the application status of the privacy policy (step S14). In this process, the one or more controllers 11 determine the application status of the privacy policy based on a storage status of the consent log in the consent log storage area 197. When determining that the privacy policy has been applied, the one or more controllers 11 display a home screen described below on the display 13 and ends the process (step S16; Yes, proceeding to step S18).

On the other hand, when determining that the privacy policy has not been applied, the one or more controllers 11 display a privacy policy consent screen (step S16; No, proceeding to step S20).

Next, the one or more controllers 11 determine whether or not a consent instruction has been received from the user via the privacy policy consent screen (step S22).

Having determined that the consent instruction has been received from the user, the one or more controllers 11 store the generated consent log in the consent log storage area 197 (step S22, proceeding to step S24). Note that when determining that the consent instruction has not been received from the user, the one or more controllers 11 continue to display the privacy policy consent screen (step S22; No, proceeding to step S20).

After storing the consent log, the one or more controllers 11 display a privacy policy management screen on the display 13 (step S24, proceeding to step S26). Then, the one or more controllers 11 determine whether or not a display termination instruction of the privacy policy management screen has been received (step S28). When determining that the display termination instruction of the privacy policy management screen has been received, the one or more controllers 11 display the home screen on the display 13 and ends the process (step S28; Yes, proceeding to step S 18). On the other hand, when determining that the display termination instruction of the privacy policy management screen has not been received, the one or more controllers 11 continue to display the privacy policy management screen (step S28; No, proceeding to step S26).

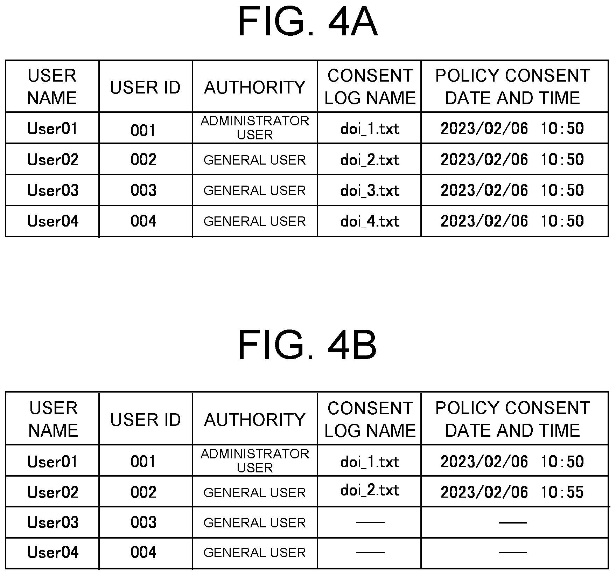

A consent log management table that manages the consent log is described using FIGS. 4A and 4B. The consent log management table exemplified in FIGS. 4A and 4B includes a user name, a user ID, authority, a consent log name, and policy consent date and time as management items. Note that the consent log may be managed in a form of, for example, a database, instead of the table described below.

The user name represents a name of the user who uses the multifunction device 10. The user ID is an identifier that uniquely identifies the user. The authority represents authority given to the user. The consent log name represents a file name of the consent log. The policy consent date and time represents date and time when the user has consented to the privacy policy.

FIG. 4A is a diagram describing an example of a data configuration of the consent log management table that manages the consent logs which is generated when the consent to the privacy policy is given by the administrator user with administrator authority. In the present disclosure, when an administrator user (User01) with the administrator authority consents to the privacy policy, all users (User02, User03, and User04) using the multifunction device 10 including the administrator user (User01) automatically consent to the privacy policy (bulk consent). In this case, the consent to the privacy policy is also applied to a general user and a non-login user registered later. Note that the administrator user can also perform consent individually for each general user including the administrator him/herself and the non-login user.

FIG. 4A shows that the administrator user (User01) has consented to the privacy policy at 10:50 on 2023/02/06. As a result, all users other than the administrator user (User01) have automatically consented to the privacy policy at the same date and time.

Note that there is no particular limitation on a file format of a text file represented by the consent log name, as long as the text file can record that the corresponding user has consented to the privacy policy. A flag indicating whether or not the consent has been given by the user may also be used.

On the other hand, FIG. 4B is a diagram describing an example of the data configuration of the consent log management table that manages the consent log which is generated when the consent to the privacy policy is given by the general user. In the present disclosure, the general user who is only authorized to use the multifunction device 10 can only consent to his/her own privacy policy. FIG. 4B shows a state in which, for example, the general user (User02) has consented to his/her own privacy policy (consent date and time: 2023/02/06 10:55), and the general user (User03) and the general user (User04) have not consented to their own privacy policy, thus their consent logs are not generated (not stored).

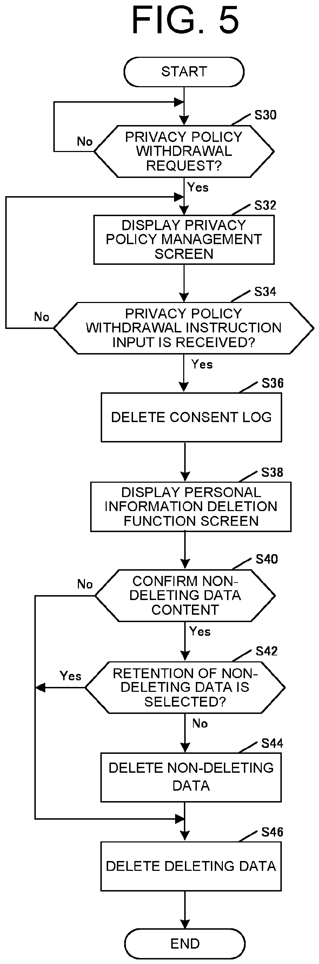

Next, a consent withdrawal process according to the first embodiment is described using a flowchart of FIG. 5. The processes described in FIG. 5 are executed by the one or more controllers 11 reading the control program 191, the display processing program 192, the consent log related program 193, the policy application program 194, the personal information processing program 195, the authentication program 196, and the like.

The one or more controllers 11 determine whether or not a privacy policy withdrawal request has been received via, for example, the home screen or the like (step S30). When determining that the privacy policy withdrawal request has been received, the one or more controllers 11 display the privacy policy management screen on the display 13 (step S30; Yes, proceeding to step S32). Note that when determining that the privacy policy withdrawal request has not been received, the one or more controllers 11 wait until the privacy policy withdrawal request is received (step S30; No).

Next, the one or more controllers 11 determines whether or not a privacy policy withdrawal instruction has been received via the privacy policy management screen (step S34). When determining that the privacy policy withdrawal instruction has been received, the one or more controllers 11 delete the corresponding consent log from the consent log storage area 197 (step S36). When determining that the privacy policy withdrawal instruction has not been received, the one or more controllers 11 continue to display the privacy policy management screen (step S34; No, proceeding to step S32).

With the deletion of the consent log in the step S36, the one or more controllers 11 make the privacy policy non-applicable (cancel the privacy policy).

Next, the one or more controllers 11 display a personal information deletion function screen described below on the display 13 (step S38) and determine whether or not a check box for confirming the content of non-deleting data, which is the personal information not to be deleted, has been checked on the personal information deletion function screen.

The one or more controllers 11 determine whether or not the content of the non-deleting data has been confirmed via a non-deleting data confirmation screen that is displayed when the check box for confirming the content of the non-deleting data is checked (step S40).

When the one or more controllers 11 determine that the check box for confirming the content of the non-deleting data has not been checked by the user, and that the content of the non-deleting data has not been confirmed via the non-deleting data confirmation screen, the one or more controllers 11 delete deleting data, which is the personal information to be deleted, and end the process (step S40; No, proceeding to step S46).

On the other hand, when the one or more controllers 11 determine that the check box for confirming the content of the non-deleting data has been checked by the user, and that the content of the non-deleting data has been confirmed via the non-deleting data confirmation screen, the one or more controllers 11 determine whether or not the user has selected to retain the non-deleting data (step S40; Yes, proceeding to step S42). When determining that the user has selected to retain the non-deleting data, the one or more controllers 11 do not delete the non-deleting data, but delete the deleting data and end the process (step S42; Yes, proceeding to step S46). On the other hand, when determining that the user has not selected to retain the non-deleting data, the one or more controllers 11 delete data specified as the non-deleting data (step S42; No, proceeding to step S44). Then, the one or more controllers 11 delete the deleting data and end the process (step S46).

### 1.3 Operation example

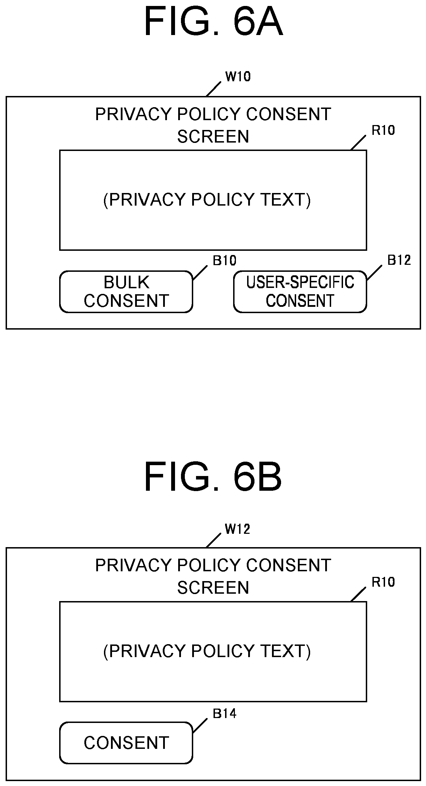

Next, operation examples according to the first embodiment are described. FIGS. 6A and 6B are diagrams describing examples of the display configuration of the privacy policy consent screen displayed by the one or more controllers 11 when the privacy policy is not applied. Note that the operation examples described in FIGS. 6A and 6B are operation examples corresponding to the process of step S20 in FIG. 3.

FIG. 6A is an example of the display configuration of a privacy policy consent screen W10 displayed by the one or more controllers 11 when a logged-in user is the administrator user with the administrator authority. The privacy policy consent screen W10 includes a privacy policy text display area R10, a bulk consent button B 10, and a user-specific consent button B12.

The privacy policy text display area R10 is a display area that displays the specific contents of the privacy policy, such as the definition of personal information, the purpose of use of personal information, the possibility of providing personal information to a third party, and the possibility of joint use of personal information.

The bulk consent button B 10 is a button that receives the consent to the privacy policy from all users using the multifunction device 10, including the administrator user. When the bulk consent button B 10 is selected by the administrator user, the one or more controllers 11 generate the consent logs for all users and store them in the consent log storage area 197 (see FIG. 4A). The user-specific consent button B 12 is a button that individually receives the consent from each general user including the administrator him/herself and the non-login user. When the user-specific consent button B 12 is selected by the administrator user, the one or more controllers 11 display a selection screen, not shown, that receives the selection of the user who consents to the privacy policy, thereby receiving the user-specific consent. When receiving the consent, the one or more controllers 11 generate the consent log for each user and stores it in the consent log storage area 197.

FIG. 6B is an example of the display configuration of a privacy policy consent screen W12 displayed by the one or more controllers 11 when the logged-in user is the general user who is only authorized to use the multifunction device 10. The privacy policy consent screen W12 includes the privacy policy text display area R10 and a consent button B14.

The privacy policy text display area R10 is the same as the privacy policy text display area R10 according to the privacy policy consent screen W10. Thus, description thereof is omitted here.

The consent button B 14 is a button that receives the consent to the privacy policy from the general user. When the consent button B 14 is selected by the general user, the one or more controllers 11 generate the consent log for the general user and stores it in the consent log storage area 197 (see FIG. 4B).

As exemplified in FIGS. 6A and 6B, in the present disclosure, the display configuration of the privacy policy consent screen displayed on the display 13 can be switched depending on the authority of the user who logs into the multifunction device 10. This makes it possible to flexibly set a range of users who are subject to consent, depending on the authority of the users who intend to consent.

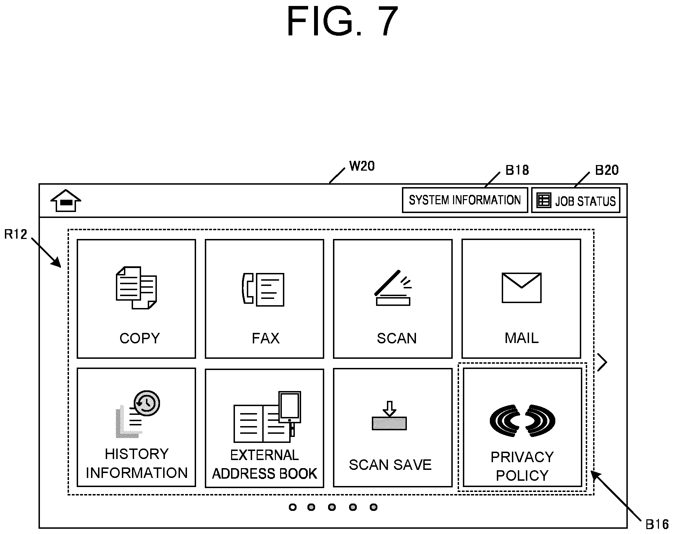

FIG. 7 is a diagram describing an example of the display configuration of a home screen W20 that can receive the privacy policy withdrawal request. The home screen W20 exemplified in FIG. 7 is displayed on the display 13, for example, when the power is turned on, during standby, when recovering from a sleep state, when an instruction to terminate the display of a particular setting screen or the like is inputted, or the like. The home screen W20 can be configured as a basic screen that receives operation input from the user. Such a home screen W20 includes a device function-related selection button area R12, a system information display button B18, and a job status button B20.

The device function-related selection button area R12 includes selection buttons that represent settings related to device functions such as an image input/output function, a communication function, a j ob-related function, and a maintenance function, and various pieces of information, using icons made up of a figure, a letter/number, a symbol, and the like. FIG. 7 is an example in which the device function-related selection button area R12 is configured with a copy button, a fax button, a scan button, a mail button, a history information button, an external address book button, a scan save button, and a privacy policy button. A privacy policy button B 16 is a selection button that receives an instruction to display a privacy policy management screen described in the next drawing as an example of a measure of inputting the privacy policy withdrawal request.

The system information display button B 18 is a button that receives the device settings for the multifunction device 10 and an instruction to display a system setting screen, not shown, for displaying a device configuration, a device status, and the like. The job status button B20 is a button that receives an instruction to display a job list screen, not shown, that shows a job progress status, and the like.

FIG. 7 is an example in which the privacy policy button B 16 is displayed in the device function-related selection button area R12. However, needless to say, the privacy policy button B 16 can be displayed in the display position of the system information display button B18 or the job status button B20 by replacing them.

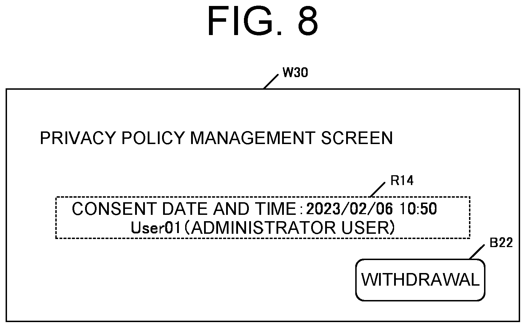

FIG. 8 is a diagram describing an example of the display configuration of a privacy policy management screen W30 displayed on the display 13 by the one or more controllers 11 when the privacy policy button B 16 on the home screen W20 exemplified in FIG. 7 is selected by the user. Note that the operation example described in FIG. 8 is an operation example corresponding to the process of step S32 in FIG. 5.

The privacy policy management screen W30 is a screen for managing the consent status for the privacy policy. The privacy policy management screen W30 includes a log information display area R14 and a withdrawal button B22. The log information display area R14 is a display area that displays, as log information, information related to the date and time of consent to the privacy policy and the consented user name among the management items managed by the consent log management table exemplified in FIG. 4. FIG. 8 is an example of displaying the log information based on the consent under the user name: User01 (administrator user) at 10:50 on 2023/02/06 in FIG. 4A or FIG. 4B. Note that the management items (log information) displayed in the log information display area R14 are not limited to the example exemplified in FIG. 8 and can be appropriately set and modified.

The withdrawal button B22 is a button that receives an instruction to withdraw the consent displayed in the log information display area R14. When the withdrawal button B22 is selected by the user, the one or more controllers 11 delete the consent log from the consent log storage area 197 and make the privacy policy non-applicable (cancel the privacy policy). Next, the one or more controllers 11 change the screen to a personal information deletion function screen described in the next drawing.

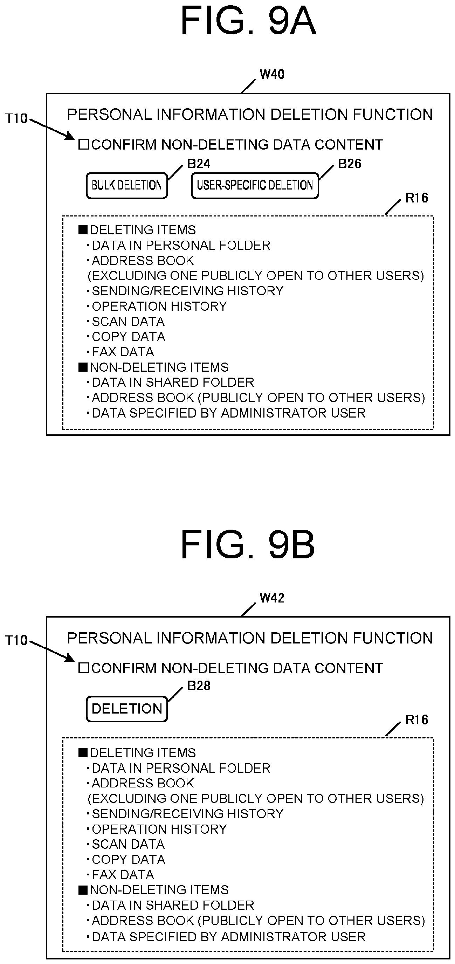

FIGS. 9A and 9B are diagrams describing examples of the display configuration of the personal information deletion function screen that is displayed on the display 13 by the one or more controllers 11 when the withdrawal button B22 on the privacy policy management screen W30 exemplified in FIG. 8 is selected by the user. Note that the operation examples described in FIGS. 9A and 9B are operation examples corresponding to the process of step S38 in FIG. 5.

FIG. 9A is an example of the display configuration of a personal information deletion function screen W40 displayed by the one or more controllers 11 when the logged-in user is the administrator user with the administrator authority. The personal information deletion function screen W40 includes a check box T10 for confirming the content of the non-deleting data, a bulk deletion button B24, a user-specific deletion button B26, and a deleting/non-deleting data display area R16.

The check box T10 for confirming the content of the non-deleting data is a check box that receives a selection of whether to enable or disable the display of a non-deleting data confirmation screen W50 described in the next drawing. When the check box T10 for confirming the content of the non-deleting data is checked by the user, and either the bulk deletion button B24 or the user-specific deletion button B26 is selected, the one or more controllers 11 display the non-deleting data confirmation screen W50 on the display 13.

The bulk deletion button B24 is a button that receives a deletion instruction to collectively delete, irrespective of the users, the deleting data, and data other than the data specified as the non-deleting data described below, exemplified in the deleting/non-deleting data display area R16. When the bulk deletion button B24 is selected, the one or more controllers 11 collectively delete the deleting data, and the data other than the data specified as the non-deleting data via the non-deleting data confirmation screen W50, of the general users including the administrator him/herself and the non-login users. The user-specific deletion button B26 is a button that receives a user-specific instruction to delete the deleting data, and the data other than the data specified as the non-deleting data. When the user-specific deletion button B26 is selected, the one or more controllers 11 display a selection screen, not shown, that receives the user's selection regarding the deletion of data, thereby receiving the user-specific deletion instruction.

The deleting/non-deleting data display area R16 is a display area that displays an example of deleting personal information (deleting data) and an example of non-deleting personal information (non-deleting data). In the present disclosure, examples of the deleting personal information upon withdrawal of the privacy policy include data in a personal folder, an address book (excluding the one publicly open to other users), sending/receiving history, operation history, scan data, copy data, and fax data. On the other hand, examples of the non-deleting personal information in the deletion of the personal information upon withdrawal of the privacy policy include data in a shared folder in a shared storage area, an address book (publicly open to other users), and data specified by the administrator user. In the present disclosure, information that is common (shared) between the user who is withdrawing the consent (regardless of whether the user is the administrator user or the general user) and other users other than the withdrawing user is retained as the non-deleting personal information, making it possible to prevent loss of convenience for other users due to the deletion of the personal information.

FIG. 9B is an example of the display configuration of a personal information deletion function screen W42 displayed by the one or more controllers 11 when the logged-in user is the general user who is only authorized to use the multifunction device 10. The personal information deletion function screen W42 includes the check box T10 for confirming the content of the non-deleting data, a deletion button B28, and the deleting/non-deleting data display area R16.

The check box T10 for confirming the content of the non-deleting data and the deleting/non-deleting data display area R16 are the same as the check box T10 for confirming the content of the non-deleting data and the deleting/non-deleting data display area R16 on the personal information deletion function screen W40, and the description thereof is omitted here.

The deletion button B28 is a button that receives an instruction to delete the deleting data, and the data other than the data specified as the non-deleting data of the general user.

Note that the deleting/non-deleting data display area R16 does not necessarily need to be provided on the personal information deletion function screen W40 or the personal information deletion function screen W42, and can be omitted if there is a limitation in the display area of the screen, or the like.

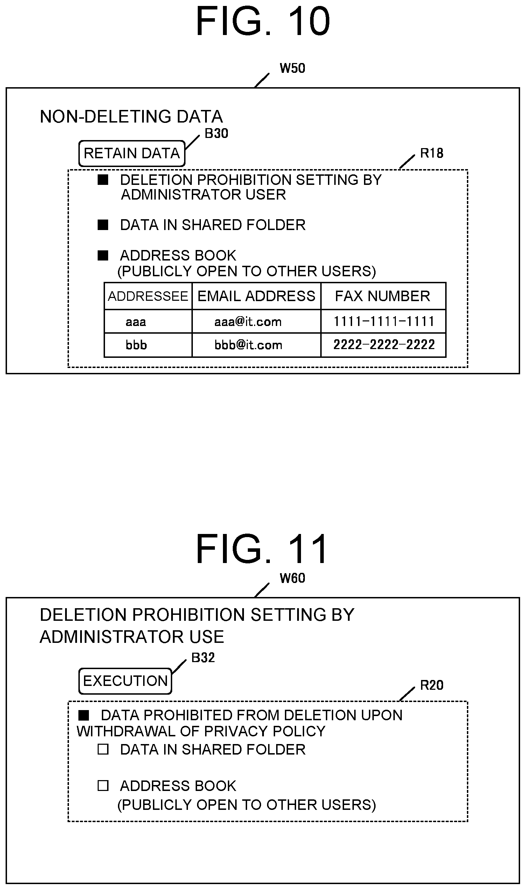

FIG. 10 is a diagram describing an example of the display configuration of the non-deleting data confirmation screen W50 displayed by the one or more controllers 11 when the check box T10 for confirming the content of the non-deleting data is checked by the user, and any of the bulk deletion button B24, the user-specific deletion button B26, or the deletion button B28 is selected. Note that the operation example described in FIG. 10 is an operation example corresponding to the process of step S40 in FIG. 5.

The non-deleting data confirmation screen W50 includes a data retention button B30 and a non-deleting data display area R18.

The non-deleting data display area R18 is a display area that displays the non-deleting personal information. Here, the personal information specified in a deletion prohibition setting by the administrator user is excluded from the deleting personal information as access to the specified personal information itself is prohibited. The data in the shared folder is the personal information that is highly common (shared) between the user who is withdrawing the consent to the privacy policy and other users other than the withdrawing user. Thus, the data in the shared folder is excluded from the deleting personal information. Note that it is preferable that the data in the shared folder is configured, for example, such that a file thumbnail is displayed, and each file can be opened and confirmed, and then deleted individually. The address book (publicly open to other users) is the personal information that is highly common (shared) with other users and is thus excluded from the deleting personal information. Note that, as exemplified in FIG. 10, it is preferable that the address book is configured such that a list of publicly open addresses is displayed, and each address in the address book can be individually accessed from a destination link or the like, and then individually deleted.

The data retention button B30 is a button that receives a selection by the user when the personal information displayed in the non-deleting data display area R18 is to be retained as the non-deleting data. When the data retention button B30 is selected by the user, the one or more controllers 11 receives specification of the personal information displayed in the non-deleting data display area R18 as the non-deleting data. Then, the one or more controllers 11 start to delete the deleting data other than the non-deleting data.

FIG. 11 is a diagram describing an example of the display configuration of a setting screen W60 that receives the deletion prohibition setting by the administrator user. The setting screen W60 includes an execution button B32 (redundant) and a deletion prohibition setting area R20.

The execution button B32 is a button that receives an instruction to confirm a setting of the personal information (non-deleting data) which deletion is prohibited when the privacy policy is withdrawn.

The deletion prohibition setting area R20 is an area that receives the selection of the non-deleting data FIG. 11 is an example of a configuration in which data in a shared folder and an address book (publicly open to other users) can be selected as the non-deleting data that is prohibited from being deleted when the privacy policy is withdrawn. The administrator user checks the check box for either or both of the data in the shared folder and the address book (publicly open to other users) as the non-deleting data, and selects the execution button B32, thereby being able to set the non-deleting date.

In this manner, the administrator user can set in advance the personal information that is prohibited from being deleted via the setting screen W60 when the privacy policy is withdrawn, making it possible to prevent the personal information desired not to be deleted from being inadvertently deleted when the privacy policy is withdrawn.

As described above, according to the first embodiment, even if the user has once consented to the privacy policy, the user can withdraw the consented privacy policy. Further, when the privacy policy is withdrawn, the personal information (the deleting data) other than the personal information (non-deleting data) set as the personal information prohibited from being deleted is deleted. Thus, there is no risk that the personal information is used or provided to a third party, making it possible to ensure a certain level of security.

### 2 Second embodiment

A second embodiment is a form in which, in the first embodiment, when the privacy policy is withdrawn, the deleting data is encrypted to prevent the personal information from being used or provided to a third party.

### 2.1 Functional configuration

The functional configuration of the multifunction device according to the second embodiment can be substantially the same as the functional configuration of the multifunction device 10 according to the first embodiment except for the personal information processing program 195. Thus, the same reference numerals are used, and the description thereof is omitted here.

The one or more controllers 11 which have read the personal information processing program 195 according to the second embodiment encrypt the deleting personal information stored in the personal information storage area 198 using an encryption method such as, for example, a common key encryption method, a public key encryption method, or a hybrid encryption method.

### 2.2 Process flow

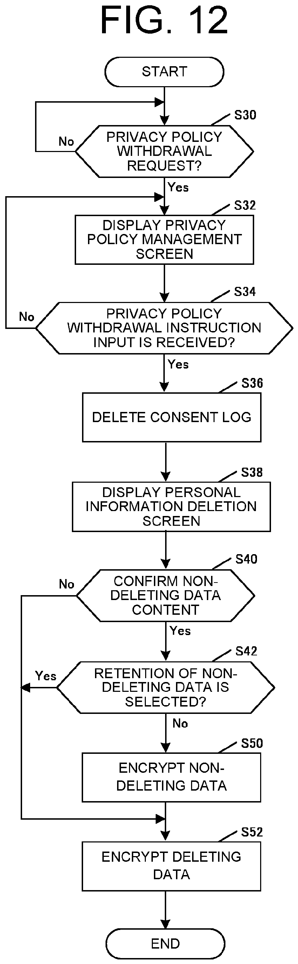

The processes from the device startup of the multifunction device 10 to obtaining the consent to the privacy policy in the second embodiment can be the same as the processes described in FIG. 3 of the first embodiment, and the description thereof is omitted here. The consent withdrawal process according to the second embodiment is described by replacing the flowchart of FIG. 5 of the first embodiment with the flowchart of FIG. 12. Note that the same processes as those in the flowchart of FIG. 5 are given the same step numbers, and the description thereof is omitted.

The one or more controllers 11 display a personal information deletion screen on the display 13 (step S38), and determine whether or not a check box for confirming the content of the non-deleting data has been checked on the personal information deletion screen.

The one or more controllers 11 determine whether or not the content of the non-deleting data has been confirmed via the non-deleting data confirmation screen that is displayed when the check box for confirming the content of the non-deleting data is checked (step S40).

When the one or more controllers 11 determine that the check box for confirming the content of the non-deleting data deleted has not been checked by the user, and the content of the non-deleting data has not been confirmed via the non-deleting data confirmation screen, the one or more controllers 11 encrypt the deleting data and end the process (step S40; No, proceeding to step S52).

On the other hand, when the one or more controllers 11 determine that check box for confirming the content of the non-deleting data has been checked by the user, and the content of the non-deleting data has been confirmed via the non-deleting data confirmation screen, the one or more controllers 11 determine whether or not the user has selected to retain the non-deleting data (step S40; Yes, proceeding to step S42). When determining that the user has selected to retain the non-deleting data, the one or more controllers 11 do not encrypt the non-deleting data, but encrypt the deleting data and end the process (step S42; Yes, proceeding to step S52). On the other hand, when determining that the user has selected not to retain the non-deleting data, the one or more controllers 11 encrypt the data specified as the non-deleting data (step S42; No, proceeding to step S50). Then, the one or more controllers 11 encrypt the deleting data and end the process (step S52).

For example, when the deleting data or the data specified as the non-deleting data is encrypted using a common key encryption method, the common key is linked to the user's login credential information, so that when the user consents to the privacy policy again, the deleting data or the non-deleting data, which has been encrypted using the linked common key, can be decrypted.

As described above, according to the second embodiment, in addition to the effects of the first embodiment, when the consent to the privacy policy is reached again after being withdrawn, the encrypted deleting data or the encrypted data specified as the non-deleting data can be decrypted and used, making it possible to improve the convenience for the user regarding the use of the personal information.

### 3 Third embodiment

A third embodiment is a form in which, in the first embodiment, when an input of an instruction to withdraw the consent to the privacy policy is received, other users other than the user who has inputted the withdrawal instruction are notified that the privacy policy has been withdrawn.

### 3.1 Functional configuration

The functional configuration of the multifunction device according to the third embodiment can be substantially the same as the functional configuration of the multifunction device 10 according to the first embodiment. Thus, the same reference numerals are used, and the description thereof is omitted here.

### 3.2 Process flow

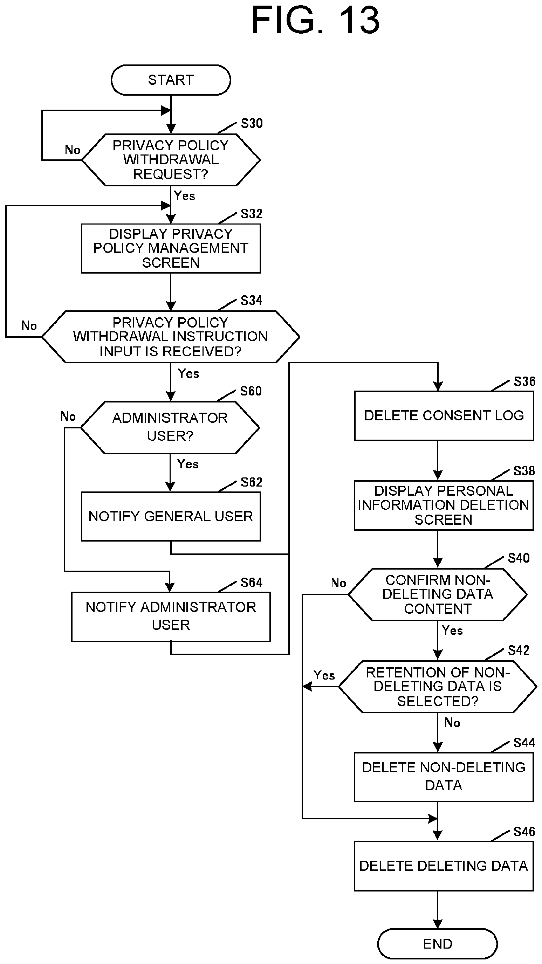

The processes from the device startup of the multifunction device 10 to obtaining the consent to the privacy policy in the third embodiment can be the same as the processes described in FIG. 3 of the first embodiment, and the description thereof is omitted here. The consent withdrawal process according to the third embodiment is described by replacing the flowchart of FIG. 5 of the first embodiment with the flowchart of FIG. 13. Note that the same processes as those in the flowchart of FIG. 5 are given the same step numbers, and the description thereof is omitted.

The one or more controllers 11 determine whether or not an instruction to withdraw the privacy policy has been received via the privacy policy management screen (step S34). When determining that the privacy policy withdrawal instruction has been received, the one or more controllers 11 determine whether or not the user who has inputted the privacy policy withdrawal instruction is the administrator user (step S34; Yes, proceeding to step S60).

When determining that the user who has inputted the privacy policy withdrawal instruction is the administrator user, the one or more controllers 11 notify the general user that the privacy policy has been withdrawn, for example, by e-mail or the like (step S60; Yes, proceeding to step S62).

On the other hand, when determining that the user who has inputted the privacy policy withdrawal instruction is the general user rather than the administrator user, the one or more controllers 11 notify the administrator user that the privacy policy has been withdrawn (step S60; No, proceeding to step S64).

After notifying that the privacy policy has been withdrawn (step S62 or step S64), the one or more controllers 11 delete the corresponding consent log from the consent log storage area 197 (step S36). When determining that the privacy policy withdrawal instruction has not been received, the one or more controllers 11 continue to display the privacy policy management screen (step S34; No, proceeding to step S32).

As described above, according to the third embodiment, when the administrator user withdraws the privacy policy, the administrator user can notify the general user that the privacy policy has been withdrawn, and when the general user withdraws the privacy policy, the general user can notify the administrator user that the privacy policy has been withdrawn. Thus, all users of the multifunction device 10 can easily recognize the consent status of the privacy policy.

### 4 Modifications

The present disclosure is not limited to the embodiments described above, and various modifications may be made thereto. That is, the technical scope of the present disclosure also includes embodiments which are obtained by combining technical measures that are modified as appropriate without departing from the gist of the present disclosure.

Further, although some parts of the above-mentioned embodiments are separately described for convenience of the description, needless to say, the embodiments may be combined and implemented within a technically allowable range.

Further, in the embodiments, the program that runs on each device is a program that controls the CPU and the like (program that causes the computer to function) to achieve the functions of the embodiments described above. The information handled by these devices is temporarily stored in a temporary storage device (e.g., RAM) during processing, and then stored in various storage devices such as read only memory (ROM) and an HDD, and is read, corrected, and written by the CPU as needed.

A recording medium that stores the program may be any of a semiconductor medium (e.g., ROM, a non-volatile memory card, etc.), an optical recording medium/magneto-optical recording medium (e.g., a digital versatile disc (DVD), a magneto optical disc (MO), a Mini Disc (MD), a compact disc (CD), a Blu-ray (registered trademark) disc (BD), etc.), a magnetic recording medium (e.g., a magnetic tape, a flexible disk, etc.), and the like. Further, the functions of the above-mentioned embodiments are achieved not only by executing the loaded program, but the functions of the present disclosure are also achieved by performing processing in collaboration with an operating system, other application programs, or the like based on the instruction of the program.

Further, when the program is to be distributed to the market, the program can be stored in a portable recording medium for distribution or can be transferred to a server computer connected via a network such as the Internet. In this case, needless to say, a storage device of the server computer is also included in the present disclosure.

## Claims

1. A processing device (1) comprising:
a storage (19) that stores a consent log that allows an application of privacy policy regarding a use of personal information based on an operation by a user;
a display (13) that displays an application status of the privacy policy via a management screen; and
one or more controllers (11) that control the application of the privacy policy depending on whether or not the consent log is stored, wherein, when receiving a withdrawal instruction to refuse the application of the privacy policy via the management screen in a state of allowing the application of the privacy policy, the one or more controllers (11) delete the consent log from the storage (19).

2. The processing device (1) according to claim 1, wherein:
the storage (19) stores the personal information; and
the one or more controllers (11) delete the personal information from the storage (19) upon deleting the consent log.

3. The processing device (1) according to claim 2, wherein, when receiving the withdrawal instruction of the privacy policy from an administrator user who has administrator authority for the processing device (1), the one or more controllers (11) delete the consent logs related to all the users of the processing device (1) and delete the stored personal information of all the users from the storage (19).

4. The processing device (1) according to claim 2, wherein, when receiving the withdrawal instruction of the privacy policy from a general user who is authorized to use the processing device (1), the one or more controllers (11) delete the consent log related to the general user and delete the stored personal information of the general user from the storage (19).

5. The processing device (1) according to claim 2, wherein the one or more controllers (11) receive the personal information that is not subject to deletion from the storage (19) via the management screen.

6. The processing device (1) according to claim 5, wherein the personal information that is not subject to the deletion from the storage (19) includes information stored in a shared storage (19) area available to the user of the processing device (1), a publicly open address book, or information specified by the administrator user who has the administrator authority for the processing device (1).

7. The processing device (1) according to claim 1, wherein:
the storage (19) stores the personal information; and
the one or more controllers (11) encrypt the personal information upon deleting the consent log.

8. The processing device (1) according to claim 1, wherein, when receiving the withdrawal instruction to refuse the application of the privacy policy via the management screen in the state of allowing the application of the privacy policy, the one or more controllers (11) notify other users other than the user who has inputted the withdrawal instruction that the privacy policy withdrawal instruction has been inputted.

9. A method for withdrawing privacy policy comprising:
storing in a storage device (19) a consent log that allows an application of the privacy policy regarding a use of personal information based on an operation by a user;
displaying an application status of the privacy policy via a management screen; and
controlling the application of the privacy policy depending on whether or not the consent log is stored, wherein, when a withdrawal instruction to refuse the application of the privacy policy is received via the management screen in a state of allowing the application of the privacy policy, the consent log is deleted from the storage device (19).

10. A processing device (1) comprising:
one or more controllers (11) that apply privacy policy regarding a use of personal information based on consent of a user to the privacy policy; and
a display (13) that displays a consent status of the user to the privacy policy via a management screen, wherein, when receiving a withdrawal instruction to withdraw the privacy policy via the management screen in a state of allowing the application of the privacy policy, the one or more controllers (11) end the application of the privacy policy.
